Europäisches Patentamt

European Patent Office

Office européen des brevets

(11) Veröffentlichungsnummer: **0 382 866**
**A1**

## (12) EUROPÄISCHE PATENTANMELDUNG

(21) Anmeldenummer: **89102538.9**

(22) Anmeldetag: **15.02.89**

(51) Int. Cl.5: **B62B 3/10**

(43) Veröffentlichungstag der Anmeldung:
**22.08.90 Patentblatt 90/34**

(84) Benannte Vertragsstaaten:
**DE ES FR GB IT NL**

(71) Anmelder: **Rönneper, Heino, Dr.**
**Wenders Strasse 3**
**D-4040 Neuss(DE)**

(72) Erfinder: **Rönneper, Heino, Dr.**
**Wenders Strasse 3**
**D-4040 Neuss(DE)**

(54) **Einkaufswagen mit abnehmbaren Körben.**

(57) Bei diesem Gerät für das Sammeln und den Transport von Waren in den Betrieben des Einzelhandels und für den Transport in die Wohnungen der Verbraucher sind die Aufbewahrungskörbe herkömmlicher Geräte so gestaltet, daß sie durch eine lösbare Verbindung mit dem Fahrgestell zwischen den Unternehmen des Handels und den Haushalten transportiert werden können. Damit wird ein häufiges Umladen der Waren erspart und gleichzeitig aus den Haushalten der Rücktransport von wiederverwertbaren Verpackungsmaterialien erleichtert. Die Konstruktion des Wagens und der Körbe führt zu einer Verringerung der bestehenden Typenvielfalt und einer vereinfachten Herstellung.

**Figur I**

EP 0 382 866 A1

## Einkaufswagen mit abnehmbaren Körben. Transport- und Aufbewahrungsgerät für das Sammeln und den Transport von Waren und Abfallgütern in Supermärkten, Einkaufszentren und Haushalten.

**Die Erfindung betrifft einen Einkaufswagen, wie er zum Transport verschiedenartiger Waren von den Kunden der Einzelhandelsgeschäfte, Supermärkte und Einkaufszentren benutzt wird.**

Der Wagen besitzt auf einem mit beweglichen Rädern fahr- und steuerbaren Gestell abnehmbare Körbe unterschiedlicher Größe, mit denen die Kunden die eingekauften Güter direkt in ihre Fahrzeuge laden oder nach Hause tragen können.

Die herkömmlichen Einkaufswagen erfordern in der Produktion für die Herstellung des fest mit dem Fahrgestell verbundenen Korbes einen hohen Fertigungsaufwand. Es ist eine Vielzahl unterschiedlich großer und nach den besonderen Erfordernissen der Märkte gestalteter Wagen im Einsatz. Alle diese herkömmlichen Modelle der Einkaufswagen belasten die Kunden mit mehrmaligem Umladen der gekauften Güter bei ihrem Transport zwischen Geschäft und Wohnung.

Die Erfindung hat sich zum Ziel gesetzt durch die Konstruktion eines Wagens die vorhandene Vielfalt der Einkaufswagenmodelle einzuschränken, damit die Produktion der Wagen und der Körbe zu vereinfachen,
und die Flexibiliät des Warentransportes für die Verbraucher zu vergrößern.

Dies wird erreicht:

1. durch die gemäß Anspruch 1 gestaltete Konstruktion des Wagens,

2. durch ein mit dem Fahrgestell abgestimmtes und lösbar verknüpfbares Sortiment von Transportkörben, die den individuellen Einkaufserfordernissen angepaßt werden können.

Der Einkauf mit den herkömmlichen Einkaufswagen erfordert vom Kunden ein mehrmaliges Ein- und Ausladen der ausgesuchten und gekauften Waren. Das häufige Umladen führt:
zu Beschädigungen der weniger haltbar und stabil verpackten Produkte und zu einer Beeinträchtigung durch Witterungseinflüsse,
sowie
zu Zeitverlust auf den Parkplätzen,
zum Verschleppen der Wagen über das Gelände der Märkte hinaus,
und zu einem erhöhten Verbrauch an umweltbelastenden Transportmitteln (Plastiktüten).

Die Erfindung hat sich die Aufgabe gestellt, die Vielfalt der verschiedenartigen Einkaufswagen durch einen universell einsetzbaren Transportwagen mit variablen, lösbaren Körben verschiedener Größe und Form zu beschränken. Damit werden die Nachteile der einseitigen Nutzbarkeit der herkömmlichen Wagen vermieden. Das Transportmittel der hier beschriebenen Art ist geeignet, durch die Aufteilung des herkömmlich fest mit dem Fahrgestell verbundenen singulären Korbes in mehrere kleine transportable Körbe das häufige Umladen beim Transport der eingekauften Waren zu vermindern und sie den Einkäufen der Kunden nach Umfang und Art anzupassen.

**Die Körbe können zusätzlich für die getrennte Sammlung und den Rücktransport der Verpackungsmaterialien und anderer wiederverwertbarer Haushaltsabfälle dienen.**

Die Erfindung löst die gestellte Aufgabe in erster Linie durch die in Anspruch 1 aufgezeigte Konstruktion. Indem der herkömmliche, fest mit dem fahrbaren Untergestell verbundene Warenkorb in verschieden große, mit Tragevorrichtungen versehene Einzelkörbe aufgeteilt wird, die der Aufnahme der verschiedenen Warengruppen angepaßt sind.

Die durch die Erfindung erreichten Vorteile sind im wesentlichen darin zusehen, daß
den Kunden beim Einkauf ein Sortieren der Güter entsprechend der späteren Nutzung oder Lagerung im Haushalt möglich ist,
ein verringertes und erleichtertes Umladen erreicht wird, da die kleineren Körbe auch von weniger kräftigen Personen bewegt werden können; die größeren Körbe durch geeignete Vorrichtungen am Fahrgestell leicht bewegt und verschoben werden können,
ein Sammeln von bestimmten Abfällen und ihr Rücktransport aus den Haushalten in den gleichen Behältnissen dergestalt stattfinden kann, daß in den verschieden gestalteten Körben die unterschiedlichen Materialien getrennt gesammelt, vorsortiert, werden können;
die Körbe in den Abmessungen sowohl den Einstellmöglichkeiten in den Haushalten Rechnung tragen als auch platzsparend aufstellbar sind,
die Herstellung der Wagen durch die Beschränkung auf das Fahrgestell vereinfacht wird und die universelle Nutzung durch die variable Verwendung der unterschiedlich ausgestalteten Körbe zu einer Minderung der Typenvielfalt führen wird.

Im folgenden wird die Erfindung anhand von lediglich einen Ausführungsweg darstellenden Zeichnungen näher erläutert, die sich allein auf die Erläuterung des Prinzips beschränken und keine maßstäblichen Angaben oder Festlegungen bedeuten.

Es zeigt

Figur 1 in perspektivischer Darstellung einen erfindungsgemäßen Einkaufswagen mit den aufgesetzten Transportkörben.

Figur 2 zeigt das Fahrgestell eines Einkaufswagens ohne Körbe in perspektivischer Sicht.

Figur 3 zeigt eine Seitenansicht des Einkaufswagen mit aufgesetzten Körben in einer der möglichen Varianten,

Figur 4 zeigt in schematischer Darstellung Varianten der Verwendung der Körbe auf der oberen Transportebene eines erfindungsgemäßen Wagens.

Figur 5 zeigt Möglichkeiten zum Stapeln der Körbe außerhalb des Wagens.

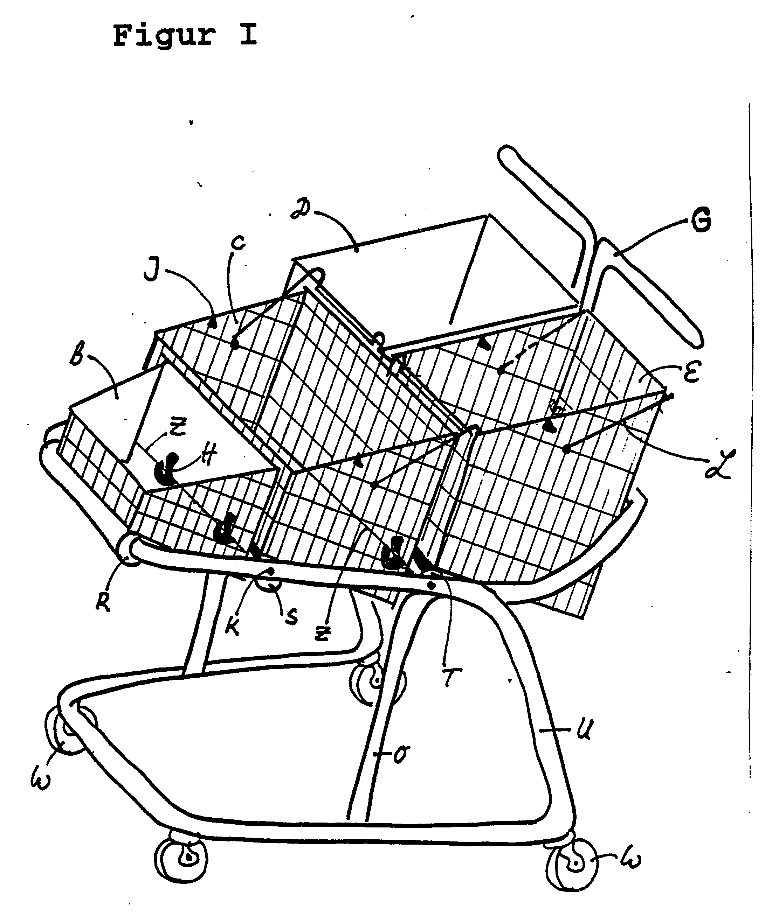

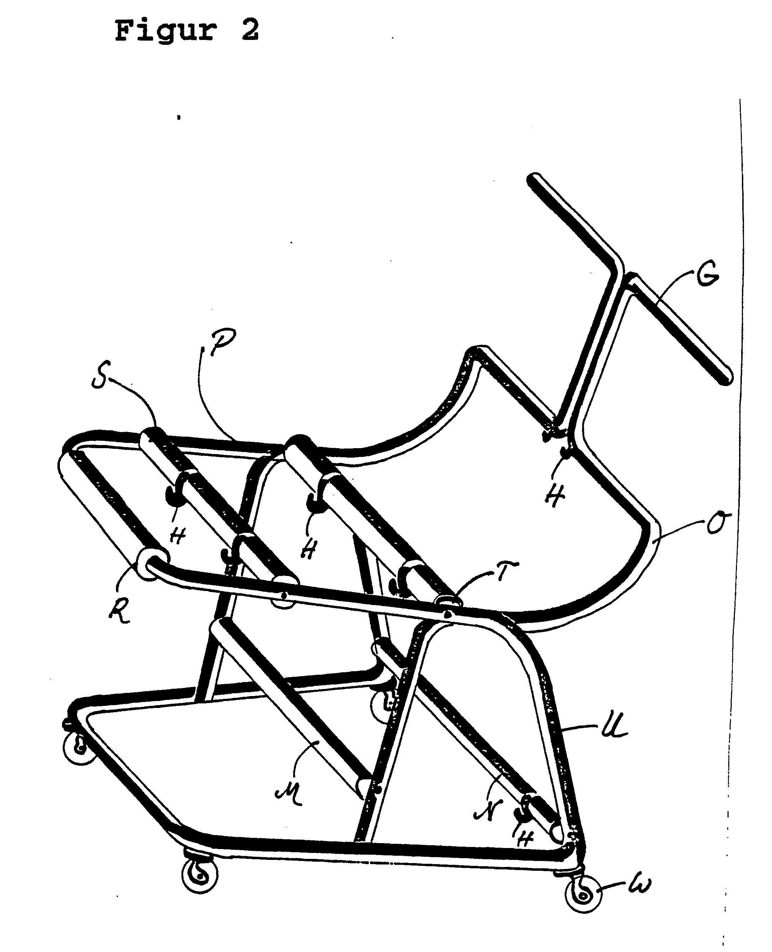

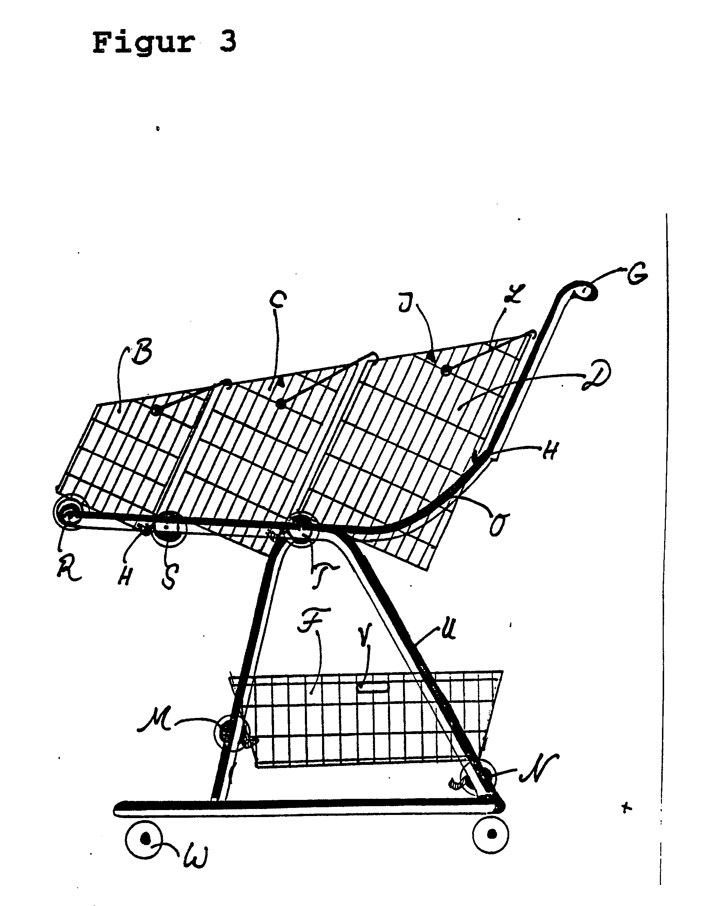

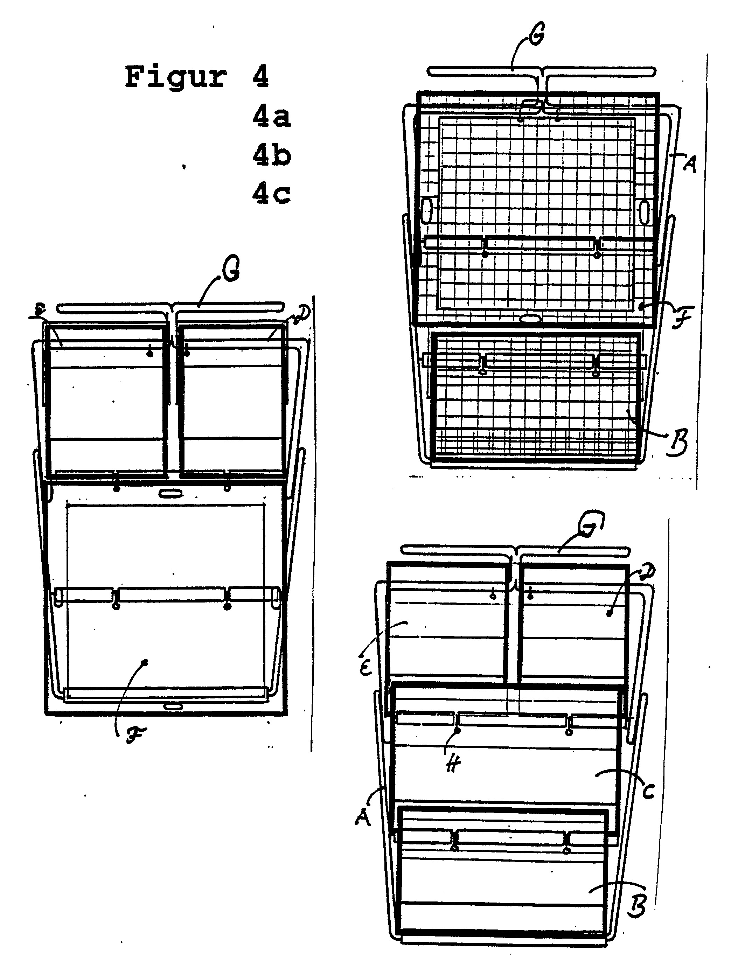

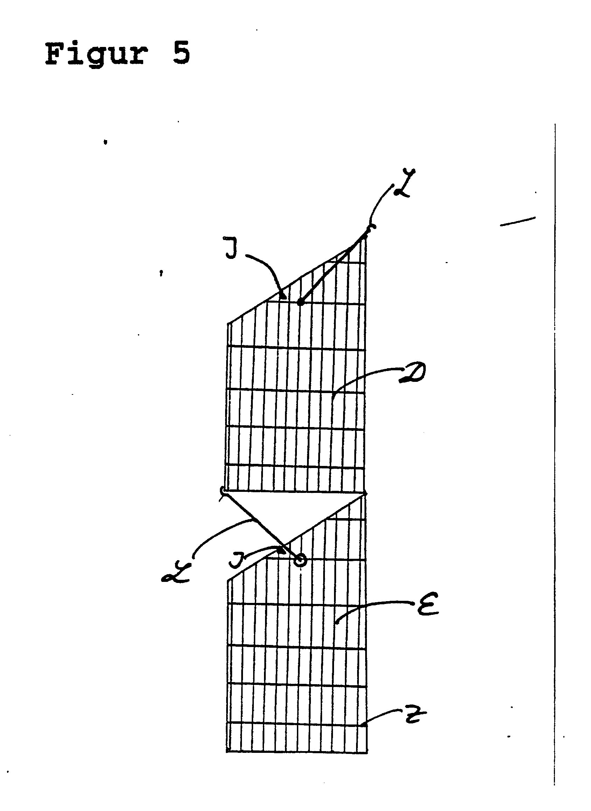

In den Figuren 1 bis 5 ist ein Einkaufswagen mit abnehmbaren Körben dargestellt, welcher in seinem prinzipiellen Aufbau aus einem Fahrgestell A und mehreren flexiblen Körben B bis F unterschiedlicher Form und Größe besteht.

Das Fahrgestell besteht aus erfindungsgemäß durchgängig geformten Profilrahmen U und O, die durch Holme K mit beweglichen Walzen R, S, T, M, J verbunden sind. Die Walzen S, T und M sind so unterbrochen, daß Haken H über den Radius der Walze hinausragen, um die ersten unteren Querstreben (Z) der Rückseiten der auf den zuvorliegenden Rollen aufgesetzten Körbe aufzunehmen. Das Fahrgestell ist in seiner Grundfläche trapezförmig gestaltet, sodaß die nicht mit Körben versehenen Wagen ineinander gestapelt werden können.

An den vier Eckpunkten des unteren trapezförmigen Rahmens sind lenkbare Räder (W) angebracht. Die aus den Profilen des Rahmens und den Walzen R, S und T gebildete Plattform (P) zur Aufnahme der Einkaufskörbe ist im Winkel a zur Waagerechten geneigt. Die Holme und Walzen R, S und T sind zwischen den Rahmen des Fahrgestells U dergestalt angebracht, daß die Achse der Rolle S so unterhalb der Linie RT liegt, daß für die Aufnahme des Korbes F eine Neigung von R nach S entsteht, sodaß der Korb F ebenfalls in den Haken H der Rolle T gehalten ist.

Damit ist verhindert, daß die Körbe durch Einwirkung seitlicher oder frontaler Kräfte aus dem Wagen gelöst werden.

Der Abstand der Rollen R, S und T ist so gestaltet, daß der jeweils hintere Korb mit seiner Grundfläche über die zuvor angebrachten Walzen gezogen werden kann.

Die Körbe sind auf einem rechteckigen Grundriß so gestaltet, daß ihre Rückseiten höher ausgeformt sind als die Frontseiten, damit ein Beladen auch bei waagerechter, stapelweiser Aufstellung außerhalb des Wagens möglich ist.

Die Körbe B, C, D und E bilden bei gleichzeitiger erfindungsmäßiger Nutzung eine einheitliche Ladefläche auf dem Fahrgestell (A).

Die Körbe B bis E sind mit Henkeln (L) als Tragevorrichtung derart versehen, daß die Henkel beim Aufsetzen der Körbe in den Wagen durch ein Übergreifen in den benachbarten Korb eine zusätzliche Verbindung und Festigung der Körbe gewährleisten. Die Körbe B bis E besitzen auf ihren Seiten unterhalb der Drehpunkte der Henkelbefestigung eine Arretierung (J) für die nach vorne gelegten Henkel, sodaß je die Körbe B und C, D und E übereinander an anderer Stelle genutzt werden können.

Der Korb F ist konisch ausgebildet und besitzt als Transporthilfen Griffmulden (V) auf jeder Seite.

Die Körbe sind in ihren Abmessungen so gestaltet, daß Korb B und C in einander stapelbar sind.

## Ansprüche

1. Wagen mit abnehmbaren Körben unterschiedlicher Größe und Gestaltung für den Transport und das Aufbewaren verschiedenartiger Gegenstände, dadurch gekennzeichnet, daß ein fahrbares Trägergestell (A) unterschiedlich große Körbe (B bis F) aufnimmt, die mit Tragevorrichtungen (L) versehen sind und untereinander gemeinsam oder einzeln auf dem Fahrgestell lösbar befestigt werden können.

2. Wagen nach Anspruch 1, dadurch gekennzeichnet, daß das Fahrgestell des Wagens aus in ihrem Mittelabschnitt erfindungsgemäß verbundenen und geformten Trägern (U und O) gebildet wird, an deren unteren Seiten die beweglichen Räder (W) befestigt sind und deren mittlere, einander gegensätzlich verlaufende Abschnitte eine gegen die Waagerechte rückwärts geneigte Plattform (P) zur Aufnahme der Körbe dadurch bilden, daß sie durch bewegliche Walzen (R, S, T), zwischen denen die über den Radius der Walzen hinausragenden Haken (H) angebracht sind, auf den Holmen K unterschiedlicher Länge so miteinander verbunden sind, daß der Grundriß des Wagens ein Trapez bildet, während der obere Abschnitt der Rahmen O so ausgeformt ist, daß er zunächst als Stütze mit den Haken (H) für die Körbe D und E, dann als Führungsdeichsel (G) dient.

3. Wagen nach Abspruch 1, 2, dadurch gekennzeichnet, daß die Körbe B bis F in unterschiedlicher Größe und Ausformung so auf dem Fahrgestell (A) angebracht werden, daß die der jeweiligen Breite entsprechenden Körbe mit ihrer Vorderseite auf der zugehörigen Walze (R bis T) aufgesetzt werden, wobei der Abstand zwischen den vorausgehenden Walzen jeweils geringer ist als die Tiefe des folgenden Korbes, und mit den ersten unteren Querstreben (Z) ihrer Rückseite in den Haken (H) zwischen den Walzen des rückwärtig folgenden Holms gehalten werden, wobei die Walzen R und S so am Rahmen des Untergestells U befestigt sind, daß die Achse der Walze S unterhalb der Linie RT liegt, um für die Aufnahme des Korbes F eine Neigung R nach S zu bilden, damit der Korb F in den Haken (H) der Walze (T) gehalten werden kann.

4. Wagen nach 1, - 3, dadurch gekennzeichnet, daß die Körbe B bis E auf einem rechteckigen Grundriß unterschiedlicher Größe mit niedriger Vorderseite, höherer Rückwand und abgeschrägten Seiten ausgeformt und mit Tragevorrichtungen (L) versehen sind, die beim Aufsetzen in den Wagen durch ein Übergreifen in den nächsten Korb eine zusätzliche Befestigung gewährleisten und bei einem Aufstellen der Körbe außerhalb mittels der Arretierung (J) vor dem Drehpunkt der Tragehenkel für den nach vorne gelegten Griff L einen Stapelaufbau ermöglichen.

5. Wagen nach Anspruch 1 - 4, dadurch gekennzeichnet, daß der Korb F sowohl auf der Plattform P nach Anspruch 2 als auch auf den Walzen M und N des Rahmens U befestigt werden kann dergestalt, daß der über rechteckigem Grundriß mit abgewinkelten gleichhohen Seiten ausgeprägte Korb in Längsrichtung über die Walze N zur Walze M geführt wird, wo er mit den oberen Querstreben in den Haken (H) der Walze M gehalten wird.

6. Wagen nach Anspruch 1, - 5, dadurch gekennzeichnet, daß die Unterseite der Körbe nach Anspruch 3 aus einer auf der oberen und unteren Seite planen, durchbrochenen Fläche besteht, die in jeder Lage über die Walzen (R bis N) bewegt werden kann.

# Figur I

# Figur 2

# Figur 3

# Figur 4
## 4a
## 4b
## 4c

# Figur 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 562 019 (BOITEAU) <br> * Figuren 1-28; Seite 4, Zeile 15 - Seite 15, Zeile 35 * <br> --- | 1,2 | B 62 B  3/10 |
| X | FR-A-2 550 074 (B. FAURE) <br> * Figuren 1-4; Seite 4, Zeile 9 - Seite 8, Zeile 10 * <br> --- | 1 | |
| A | EP-A-0 119 682 (LUCAS PETER) <br> * Figuren 1-7; Seite 5, Zeile 14 - Seite 11, Zeile 3 * <br> --- | 1 | |
| A | GB-A-2 116 490 (HARWOOD) <br> * Figuren 1-3; Seite 1, Zeilen 58-106 * <br> ----- | 1 | |
| | | | **RECHERCHIERTE SACHGEBIETE (Int. Cl.5)** <br><br> B 62 B |

Der vorliegende Recherchenbericht wurde für alle Patentansprüche erstellt

| Recherchenort | Abschlußdatum der Recherche | Prüfer |
|---|---|---|
| DEN HAAG | 16-10-1989 | VANNESTE M.A.R. |